# EUROPEAN PATENT SPECIFICATION

(11) **EP 3 633 627 B1**
(45) Date of publication and mention of the grant of the patent: **15.01.2025**
(21) Application number: 18806486.9
(22) Date of filing: 15.05.2018
(51) Int. Cl.: G06T 19/00, B63B 49/00, G01C 21/10, G08G 3/00

(54) **AUGMENTED REALITY IMAGING INDICATIVE OF A SITUATION AROUND A WATER-SURFACE MOVABLE BODY**
AUGMENTED REALITY-BILDGEBUNG, DIE EINE SITUATION RUND UM EINEN BEWEGLICHEN KÖRPER AUF EINER WASSEROBERFLÄCHE ANZEIGT
IMAGERIE EN RÉALITÉ AUGMENTÉE INDIQUANT UNE SITUATION AUTOUR D'UN CORPS MOBILE SUR UNE SURFACE D'EAU

(30) Priority: 24.05.2017 JP 2017103151
(43) Date of publication of application: 08.04.2020
(73) Proprietor: Furuno Electric Co., Ltd., Nishinomiya-City, Hyogo 662-8580 (JP)
(72) Inventor: NISHIYAMA, Koji, Nishinomiya-City Hyogo 662-8580 (JP)
(74) Representative: Müller Hoffmann & Partner
(86) International application number: PCT/JP2018/018650
(87) International publication number: WO 2018/216539

(56) References cited:
- JP-A- 2006 060 309
- JP-A- 2015 215 278
- JP-A- H0 887 232
- JP-A- H06 301 897
- US-A1- 2013 162 632
- P C VAN KLUIJVEN: "Augmented reality used in navigation. Project 2 Theme: improvement and innovation Content", 5 February 2013 (2013-02-05), XP055199421, Retrieved from the Internet <URL:http://www.maritimesymposium-rotterdam.nl/uploads/Route/Augmented Reality On The Bridge.pdf> [retrieved on 20150701]
- JEAN-CHRISTOPHE MORGÈRE: "Mobile augmented reality system for maritime navigation", 22 January 2016 (2016-01-22), XP055603752, Retrieved from the Internet <URL:https://tel.archives-ouvertes.fr/tel-01258911/document> [retrieved on 20190709]
- WISERNIG EDUARD ET AL: "Augmented Reality Visualization for Sailboats (ARVS)", 2015 INTERNATIONAL CONFERENCE ON CYBERWORLDS (CW), IEEE, 7 October 2015 (2015-10-07), pages 61 - 68, XP032859027, DOI: 10.1109/CW.2015.74
- ANONYMOUS: "Automatic identification system", 17 May 2017 (2017-05-17), XP055771853, Retrieved from the Internet <URL:https://en.wikipedia.org/w/index.php?title=Automatic_identification_system&oldid=780754157> [retrieved on 20210203]

## Description

### TECHNICAL FIELD

The present disclosure relates to an image generating device. In detail, the present disclosure relates to an image generating device which generates an image indicative of a situation around a water-surface movable body.

### BACKGROUND OF THE INVENTION

For example, this kind of image generating device is disclosed in Patent Document 1. The image generating device of Patent Document 1 includes a camera, an imaging data receiving part, a position acquiring part, an image generating part, a target object display item generating part, and a display unit, and is configured to perform geo-referencing of the image stream from the camera.

In Patent Document 1, the imaging data receiving part receives the stream image data captured by the camera of a ship. The position acquiring part acquires the position of a target object around the ship (another ship etc.). The image generating part generates an image to be displayed on the display unit based on the image of the stream image data. The image supports the position and the view of the camera. The target object display item generating part generates a target object display item indicative of the target object at a point on the image. The display is configured to display the image, and the target object display item placed at the point on the image.

The image generating part generates the image by projecting the image on a three-dimensional virtual space in which points correspond to the points on the image, and the environment around the water-surface movable body is indicated. Further, the target object display item generating part generates the target object display item based on positional information on the target object, and the points of the three-dimensional virtual space.

### [Reference Document of Conventional Art]

### [Patent Document]

[Patent Document 1] US2015/0350552A1

However, in the configuration of Patent Document 1, a time interval at which the position acquiring part acquires the position of a target object, such as another ship which moves around the ship may became longer. In that case, the frequency at which the indication of the target object display item is updated decreases, and the motion of the target object display item in the image may be displayed unnaturally without smoothness.

From US 2013/162632 A1, a wearable display device is known. In one embodiment, a display view of a maritime scenery for navigating on a river, bay or ocean with an approaching ship is shown.

The paper by P.C. van Kluijven having the title: "Augmented reality use in navigation. Project 2 Theme: improvement and innovation Content", 5 February 2013, Netherlands Maritime University, that was retrievable when following the link URL:http://www.maritimesymposium-rotterdam.nl/uploads/Route/Augemented Reality On The Bridge.pdf, deals with providing augmented reality in a maritime situation, for informing a person responsible for navigating a vessel about safety-relevant environmental features.

The doctoral thesis by Jean-Christophe Morgère: "Mobile augmented reality system for maritime navigation", 22 January 2016, pages 1-139, Université de Bretagne Sud, UFR Sciences et Sciences de l'Ingénieur, France, that was retrievable when following the link URL:https://tel.archives-ouvertes.fr/ tel-01258911/document, teaches as well to use augmented reality for maritime navigation purposes.

The paper by Eduard Wisernig et al.: "Augmented Reality Visualization for Sailboats (ARVS)", 2015 International Conference on cyberworlds (CW), IEEE, 7 Octobre 2015, pages 61-68, DOI: 10.1109/CW.2015.74 discloses to equip sailboats with two cameras and with sensors, displaying information obtained by the sensors in an image that is based on a camera image.

The paper (of which the author is not known) having the title; "Automatic identification system", 17 may 2017, that was retrievable under URL:https://en.wikipedia.org/w/index.php?title=Automatic identifcation system&old id=789754157, is related to a system for avoiding collision of ships.

The present disclosure is made in view of the above situation, and one purpose thereof is to realize a virtual reality image with a smooth motion.

### SUMMARY OF THE INVENTION

The problem to be solved by the present invention is as described above, and means to solve the problem and the effect thereof is defined by the independent claims and furthermore described below.

According to one aspect of the present invention, an image generating device with the following configuration is provided. That is, the image generating device includes a captured image inputting module, a position acquiring module, a posture acquiring module, an additional display information acquiring module, a synthesized image generating module, a target object position estimating module, and an image updating module. The captured image inputting module acquires an image captured by an imaging device mounted on a water-surface movable body. The position acquiring module acquires positional information indicative of a position of the water-surface movable body. The posture acquiring module acquires posture information indicative of a posture of the water-surface movable body. The additional display information acquiring module non-continuously acquires additional display information including information indicative of a position of a target object. The synthesized image generating module generates a synthesized image every time additional display information is acquired, where a graphic rendering a three-dimensional virtual reality object indicative of the additional display information is synthesized with the captured image based on measured position and imaging direction of the imaging device relative to the water-surface movable body, the positional information, the posture information, and the additional display information. The target object position estimating module estimates a position of the target object at a timepoint between acquisition of two consecutive pieces of additional display information, based on a speed of the target object included in the additional display information. The image updating module causes the synthesized image generating module to update the rendering of the virtual reality object of the target object in the synthesized image such that the three-dimensional virtual reality object is rearranged in the synthesized image based on a result of the estimation by the target object position estimating module at said timepoint between acquisition of two consecutive pieces of additional display information.

According to this configuration, even when a time interval of acquisition of the additional display information indicative of the position of the target object is long, the graphic rendering the virtual reality object can be updated by estimating the position of the target object at the suitable timing. Therefore, it may become possible to realize the virtual reality image with a smooth motion.

The image generating device may have the following configuration. That is, the image generating device may include a target object direction estimating module. The target object direction estimating module may estimate a direction of the target object at the timing later than the timing at which the additional display information is acquired the latest, based on an angular velocity of the direction of the target object included in the additional display information or an angular velocity of the direction of the target object estimated from the additional display information. The image updating module may cause the synthesized image generating module to update the rendering of the virtual reality object of the target object in the synthesized image based on a result of the estimation by the target object direction estimating module.

According to this configuration, the graphic rendering the virtual reality object can be updated by estimating the direction of the target object at the suitable timing similarly to the position. Therefore, a more natural motion of the image can be realized.

In the image generating device, the synthesized image generating module may synthesize the graphic rendering the virtual reality object having the shape of a ship with the captured image.

According to this configuration, the movement of a surrounding ship can be expressed by the smooth motion of the three-dimensional computer graphic of a ship.

In the image generating device, the additional display information may include AIS information received by an AIS receiver.

According to this configuration, even when the target object is based on the additional display information received by the AIS receiver of which the updating frequency tends to be less in many cases, the virtual reality image with the smooth motion can be realized.

In the image generating device, the additional display information may include information on the position and the speed of the target object acquired based on successive radar images from a radar device.

According to this configuration, even when the target object (another ship) is based on the additional display information from the radar device which cannot update information such as the position of the target object, until a radar antenna revolves one time, the virtual reality display with the smooth motion can be realized.

### BRIEF DESCRIPTION OF DRAWINGS

Fig. 1 is a block diagram illustrating the entire configuration of an image generating device according to one embodiment of the present disclosure.
Fig. 2 is a side view illustrating various kinds of instruments mounted on a ship.
Fig. 3 is a conceptual diagram illustrating one example of the additional display information to be displayed in the image generating device.
Fig. 4 is a conceptual diagram illustrating three-dimensional scene data generated so that virtual reality objects are placed in a three-dimensional virtual space, and a projection screen placed in the three-dimensional virtual space.
Fig. 5 is a view illustrating one example of a captured image by a camera.
Fig. 6 is a view illustrating a synthesized image outputted from a data synthesizing module.
Fig. 7 is a conceptual diagram illustrating a case where the ship shakes in a pitch direction and a roll direction from the state of Fig. 4.
Fig. 8 is a view illustrating a synthesized image in the case of Fig. 7.
Fig. 9 is a conceptual diagram illustrating a situation where a position and a direction of the virtual reality object of a ship being placed in the three-dimensional virtual space are updated for the additional display information on another ship based on AIS information.
Fig. 10 is Display Example 1 of a direction scale.
Fig. 11 is Display Example 2 of the direction scale.
Fig. 12 is a flowchart of a method of generating an image according to one embodiment of the present disclosure.

### DETAILED DESCRIPTION OF THE INVENTION

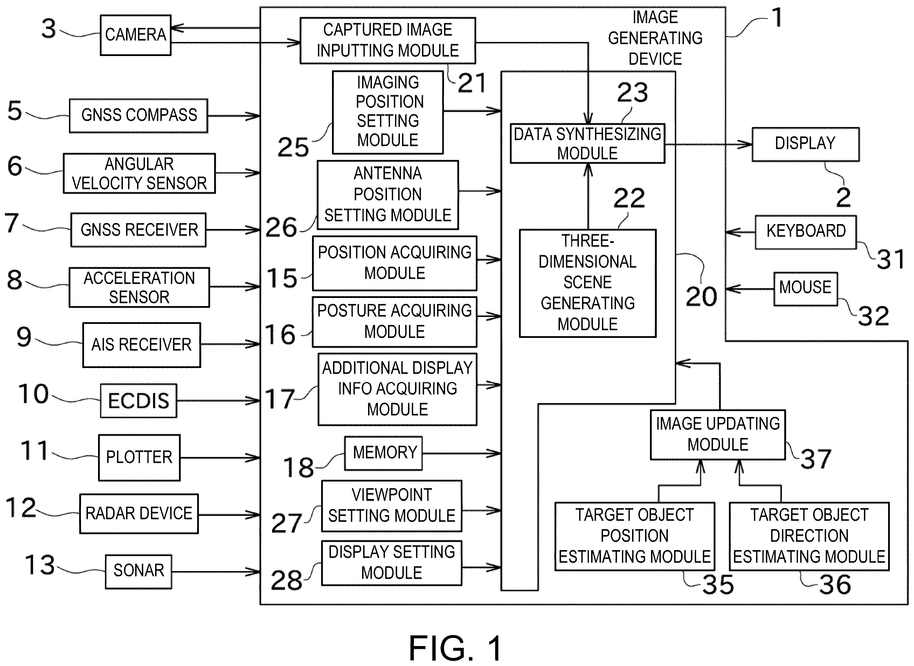

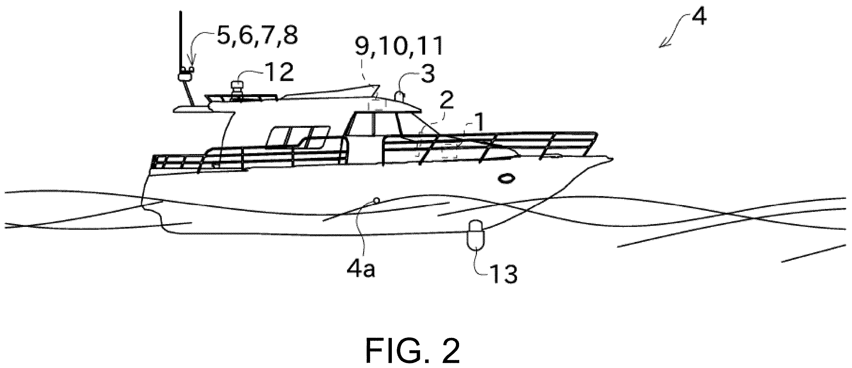

Next, one embodiment of the present disclosure is described with reference to the drawings. Fig. 1 is a block diagram illustrating the entire configuration of an image generating device 1 according to one embodiment of the present disclosure. Fig. 2 is a side view illustrating various kinds of instruments mounted on a ship 4.

The image generating device 1 illustrated in Fig. 1 may be a device which is mounted on the ship (water-surface movable body) 4 as illustrated, for example, in Fig. 2, and may generate an image expressing the situation around the ship 4 in virtual reality based on the image captured by a camera (imaging device) 3. The image generated by the image generating device 1 may be displayed on a display unit 2.

The display unit 2 may be configured as, for example, a display unit for a navigation assisting device to which a ship operator who operates the ship 4 refers. However, the display unit 2 is not limited to the above configuration, and, for example, it may be a display unit for a portable computer which is carried by a ship operator's assistant who monitors the surrounding situation from the ship 4, a display unit for a passenger to watch in the cabin of the ship 4, or a display part for a head mounted display, such as a wearable glass, worn by a passenger.

The image generating device 1 may generate a synthesized image which is an output image to the display unit 2 by synthesizing the image around the ship 4 captured by the camera 3 installed in the ship 4, and graphics which expresses additional display information on the perimeter of the ship 4 in virtual reality (as will be described in detail later).

Next, mainly referring to Fig. 1, the camera 3 and various kinds of ship instruments which may be electrically connected to the image generating device 1 are described.

The camera 3 may be configured as a wide-angle video camera which images the perimeter of the ship 4. This camera 3 may have a live output function, capable of generating video data (image data) as the imaged result on real time, and outputting it to the image generating device 1. As illustrated in Fig. 2, the camera 3 may be installed in the ship 4 so that an imaging direction becomes horizontally forward of the hull.

The camera 3 may be attached to the ship 4 through a rotating mechanism (not illustrated) and, therefore, the imaging direction can be changed in a given angle range on the basis of the hull of the ship 4 by inputting a signal for instructing pan/tilt from the image generating device 1. Moreover, since the height and the posture of the ship 4 variously change due to waves etc., the height of the camera 3 may change in connection with the change, and the posture (imaging direction) may also change three-dimensionally.

The image generating device 1 of this embodiment may be electrically connected to, in addition to the camera 3, a GNSS compass (a direction sensor, a posture sensor) 5, an angular velocity sensor 6, a GNSS receiver 7, an acceleration sensor 8, an AIS receiver 9, an ECDIS 10, a plotter 11, a radar device 12, and a sonar 13, etc. as the ship instrument.

The GNSS compass 5 may be provided with a plurality of GNSS antennas (positioning antenna) fixed to the ship 4. The GNSS compass 5 may calculate spatial relationships of the GNSS antennas based on radio waves received from positioning satellites. Particularly, the GNSS compass 5 of this embodiment may be configured to obtain the spatial relationships of the GNSS antennas based on phase differences of carrier phases of the radio waves received by the respective GNSS antennas (since this processing is known, detailed description thereof is omitted). Therefore, a bow direction of the ship 4 can be acquired with sufficient accuracy.

The GNSS compass 5 may acquire the posture of the ship 4 three-dimensionally. In other words, the GNSS compass 5 may detect a roll angle and a pitch angle of the ship 4, as well as the bow direction (i.e., yaw angle of the ship 4). The posture information on the ship 4 acquired by the GNSS compass 5 may be outputted to a posture acquiring module 16 of the image generating device 1, and other ship instruments utilizing the posture information.

The angular velocity sensor 6 may be, for example, comprised of a known oscillating gyroscope sensor, which is capable of detecting a yaw angular velocity, a roll angular velocity, and a pitch angular velocity of the ship 4 at a cycle shorter than a posture detection interval of the GNSS compass 5 (e.g., 1 second). By using both an angle detected by the GNSS compass 5 and an integrated value of the angular velocity detected by the angular velocity sensor 6, the posture of the ship 4 can be acquired at a time interval shorter than the case where only the GNSS compass 5 is used. Moreover, the angular velocity sensor 6 may function as an alternative for acquiring the posture information, when the radio wave from the positioning satellite is interrupted with an obstacle, such as a bridge, and the posture becomes undetectable by the GNSS compass 5.

The GNSS receiver 7 may find the position of the ship 4 (in detail, a latitude, a longitude, and a height of the GNSS antenna) based on the radio waves which the GNSS antennas received from the positioning satellites. The GNSS receiver 7 may output the acquired positional information to a position acquiring module 15 of the image generating device 1, and/or other ship instruments utilizing the positional information.

The acceleration sensor 8 may be configured, for example, as a known capacitance detection type sensor, which is capable of detecting accelerations about the yaw axis, the roll axis, and the pitch axis of the ship 4 at a cycle shorter than a position detection interval of the GNSS receiver 7 (e.g., 1 second). By using both the position detected by the GNSS receiver 7, and a double integrated value of the acceleration detected by the acceleration sensor 8, the position of the ship 4 can be acquired at a time interval shorter than the case where only the GNSS receiver 7 is used. Moreover, the acceleration sensor 8 may function as an alternative for acquiring the positional information, when the radio wave from the positioning satellite is interrupted, and the detection of the position is impossible by the GNSS receiver 7.

In this embodiment, as illustrated in Fig. 2, the angular velocity sensor 6, the GNSS receiver 7, and the acceleration sensor 8 may be built in the GNSS compass 5. However, some or all of the angular velocity sensor 6, the GNSS receiver 7, and the acceleration sensor 8 may be provided independently from the GNSS compass 5.

The AIS receiver 9 may receive AIS information transmitted from another ship, a land station, etc. The AIS information may include various information, such as a position (latitude and longitude) of another ship which travels around the ship 4, a length and a width of another ship, and a type and identifying information of another ship, a ship speed, a course, a destination of another ship, and a position and identifying information of a landmark.

The ECDIS 10 may acquire the positional information on the ship 4 from the GNSS receiver 7 and output the information on the perimeter of the ship 4 to the image generating device 1 based on electronic nautical chart information stored beforehand.

The plotter 11 may generate information on a traveling trail of the ship 4 by continuously acquiring the position of the ship 4 from the GNSS receiver 7. Moreover, by allowing a user to set a plurality of waypoints (points through which the ship 4 is scheduled to pass), the plotter 11 can generate a scheduled route by sequentially connecting these waypoints.

The radar device 12 may detect a target object, such as another ship, which exists around the ship 4. Moreover, the radar device 12 may have a known target tracking function (TT) which can acquire and track the target object, and may find a position and a velocity vector (TT information) of the target object.

The sonar 13 may detect a school of fish etc. by transmitting an ultrasonic wave underwater and receiving a reflective wave which is the ultrasonic wave reflected on the school of fish etc.

The image generating device 1 may be connected to a keyboard 31 and a mouse 32 which the user operates. The user can perform various kinds of instructions about generation of an image by operating the keyboard 31 and the mouse 32. The instructions may include the pan/tilt operation of the camera 3, setting of displaying or not-displaying of various information, and a setup of a viewpoint of a synthesized image.

Next, a configuration of the images generating device 1 is described in detail mainly referring to Fig. 1.

As illustrated in Fig. 1, the image generating device 1 may include a captured image inputting module 21, the position acquiring module 15, the posture acquiring module 16, an additional display information acquiring module 17, a memory 18, an imaging position setting module 25, an antenna position setting module 26, a viewpoint setting module 27, a display setting module 28, a synthesized image generating module 20, a target object position estimating module 35, a target object direction estimating module 36, and an image updating module 37.

In detail, although the image generating device 1 is configured as a known computer and is not illustrated, it may include a CPU, a ROM, a RAM, and a HDD. Further, the image generating device 1 may be provided with a GPU for performing three-dimensional image processing (described later) at high speed. The HDD stores, for example, software for performing image synthesizing method of the present disclosure. By collaboration of the hardware and the software, the image generating device 1 can be functioned as the captured image inputting module 21, the position acquiring module 15, the posture acquiring module 16, the additional display information acquiring module 17, the memory 18, the imaging position setting module 25, the antenna position setting module 26, the viewpoint setting module 27, the display setting module 28, the synthesized image generating module 20, the target object position estimating module 35, the target object direction estimating module 36, the image updating module 37 etc.

The captured image inputting module 21 may accept an input of image data outputted from the camera 3, for example, at 30 frames per second. The captured image inputting module 21 may output the inputted image data to the synthesized image generating module 20 (a data synthesizing module 23 described later).

The position acquiring module 15 may acquire the current position of the ship 4 on real time based on the detection results of the GNSS receiver 7 and the acceleration sensor 8.

The posture acquiring module 16 may acquire the current posture of the ship 4 on real time based on the detection results of the GNSS compass 5 and the angular velocity sensor 6.

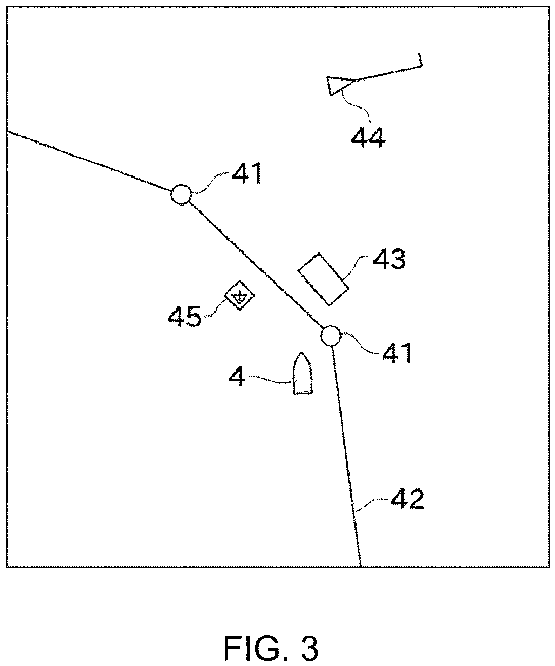

The additional display information acquiring module 17 may acquire information to be displayed in addition to the image captured by the camera 3 (additional display information) based on information outputted to the image generating device 1 from the AIS receiver 9, the ECDIS 10, the plotter 11, the radar device 12, the sonar 13, etc. Although various information can be considered as the additional display information, the information may be, for example, about another ship 44 received by the AIS receiver 9 as illustrated in Fig. 3. Note that, the details of the additional display information will be described later.

The memory 18 of Fig. 1 may be configured as a memory which stores various kinds of information. The memory 18 may store three-dimensional shapes of virtual reality objects expressing various kinds of the additional display information as templates. Although the templates of the three-dimensional shapes stored in the memory 18 may be, for example, a small ship or boat, a large-sized ship or vessel, a buoy, a lighthouse, etc., they are not limited to these examples.

The imaging position setting module 25 may set the position of the camera 3 in the ship 4 (imaging position), specifically, the position of the camera 3 in the longitudinal direction and the width direction of the ship, and the position of the camera in the vertical direction (the height of the camera 3). Although the height of the camera 3 may be a height from a waterline normally assumed in the ship 4, it is not limited to this height and it may also be, for example, a height from the ship's bottom. This setup of the imaging position may be performed, for example, by the user operating the keyboard 31, the mouse 32, etc. to input the result of an actual measurement of the position of the camera 3.

The antenna position setting module 26 may set the position of the GNSS antenna in the ship 4 (antenna position). This antenna position may be, for example, positions in the longitudinal direction, the width direction, and the vertical direction of the ship with respect to a reference point 4a set in the ship 4 as a reference of control as illustrated in Fig. 2. Although this reference point 4a may be defined variously, it may be defined at a position at the center of the hull of the ship 4 and at the same height as the waterline normally assumed, in this embodiment. The setup of the antenna position may be performed, for example, by inputting an actual measurement value, similar to the imaging position described above.

The viewpoint setting module 27 of Fig. 1 may set the viewpoint of the image generated by the synthesized image generating module 20 (described later), for example, by the user operating the keyboard 31 and the mouse 32.

The display setting module 28 may set, for example, displaying or not-displaying of the additional display information in the image generated by the synthesized image generating module 20 (described later). The settings to the display setting module 28 may be performed by the user operating the keyboard 31 and the mouse 32.

The position acquiring module 15, the posture acquiring module 16, the additional display information acquiring module 17, the memory 18, the imaging position setting module 25, the antenna position setting module 26, the viewpoint setting module 27, and the display setting module 28 may acquire, store or output the setting information to the synthesized image generating module 20.

The synthesized image generating module 20 may generate an image expressing extended reality by synthesizing three-dimensional computer graphics with the captured image of the camera 3 inputted into the captured image inputting module 21. This synthesized image generating module 20 may include a three-dimensional scene generating module 22 and the data synthesizing module 23.

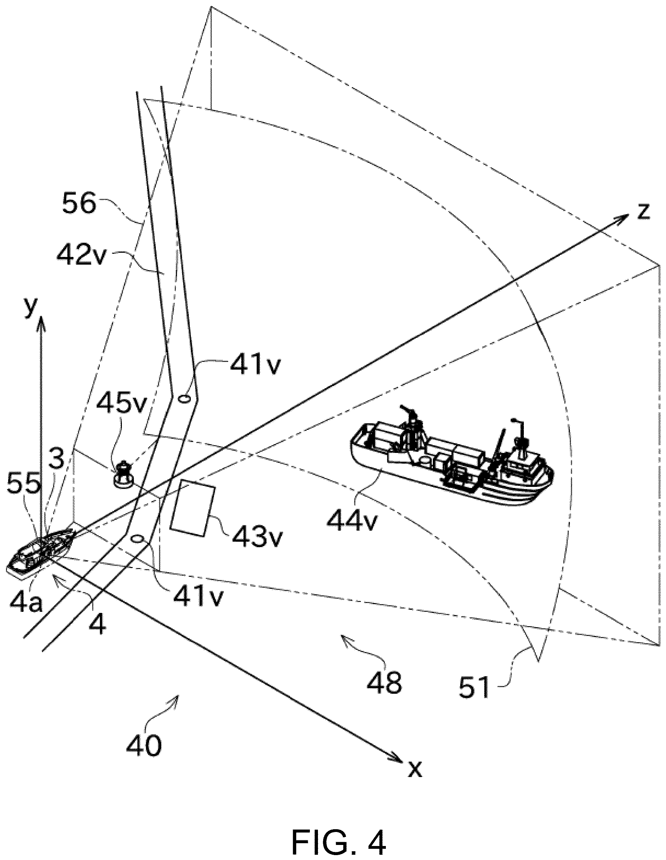

As illustrated in Fig. 4, the three-dimensional scene generating module 22 may establish a three-dimensional scene of virtual reality by placing virtual reality objects 41v, 42v,... corresponding to the additional display information in a three-dimensional virtual space 40. Therefore, a three-dimensional scene data (three-dimensional display data) 48 which is data of the three-dimensional scene may be generated. Note that the details of the three-dimensional scene will be described later.

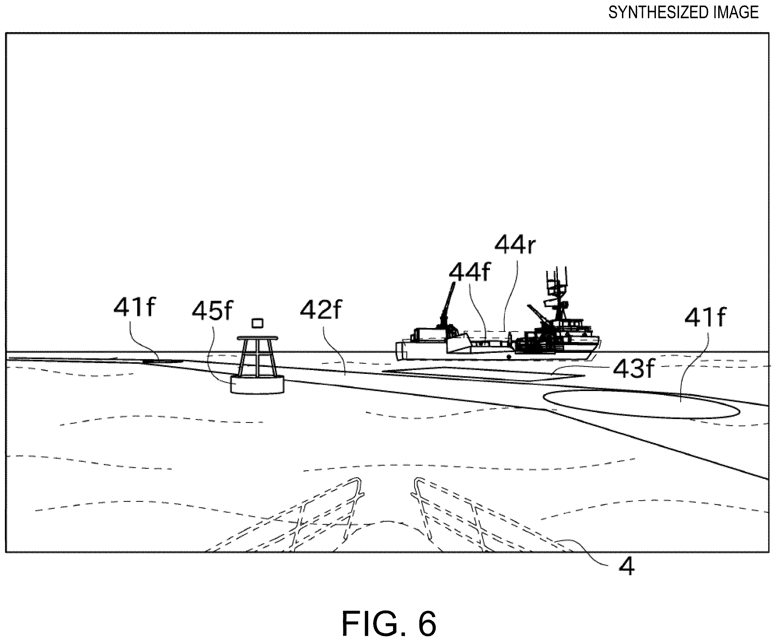

The data synthesizing module 23 of Fig. 1 may generate a graphic which three-dimensionally expresses the additional display information by rendering the three-dimensional scene data 48 generated by the three-dimensional scene generating module 22. The data synthesizing module 23 may also output a synthesized image as illustrated in Fig. 6, i.e., the image synthesized the graphics 41f, 42f,... with the captured image of the camera 3. As illustrated in Fig. 6, in this synthesized image, the graphics 41f, 42f,... indicative of the additional display information may be placed on a sea surface image captured by the camera 3 (illustrated in this figure by broken lines for convenience of description) in a superimposed fashion. The data synthesizing module 23 may output the generated synthesized image to the display unit 2. Note that the details of generation of the graphics and the data synthesizing will be described later.

The target object position estimating module 35 of Fig. 1 may estimate the current position of a moving target object (e.g., another ship 44 of Fig. 3) among suitable target objects for displaying the additional display information, based on the latest-acquired additional display information. Moreover, the target object direction estimating module 36 may estimate the present direction of this moving target object based on the latest-acquired additional display information. The estimated results by the target object position estimating module 35 and the target object direction estimating module 36 may be used as the position and the direction of the virtual reality object 44v being placed in the three-dimensional virtual space 40 by the three-dimensional scene generating module 22 as illustrated in Fig. 4. Note that, the details of the estimations will be described later.

The image updating module 37 may input information for updating the position and the direction of the target object in the three-dimensional scene (hereinafter, may be referred to as "updating information") into the synthesized image generating module 20 based on the estimated results by the target object position estimating module 35 and the target object direction estimating module 36. The three-dimensional scene generating module 22 of the synthesized image generating module 20 may update the three-dimensional scene based on the inputted updating information. The data synthesizing module 23 of the synthesized image generating module 20 may update the synthesized image based on the updated three-dimensional scene.

Next, the additional display information described above acquired by the additional display information acquiring module 17 is described in detail. Fig. 3 is a conceptual diagram illustrating one example of the additional display information to be displayed in the image generating device 1.

The additional display information may be information displayed in addition to the image captured by the camera 3, and may be various items according to the purpose and the function of the ship instruments connected to the image generating device 1. For example, as for the AIS receiver 9, the received AIS information (e.g., the position and the direction of another ship, the position of a buoy, and the position of a virtual buoy) may be the additional display information. As for the ECDIS 10, the additional display information may be a position of a dangerous water area, a traveling prohibited area, a lighthouse, or a buoy contained in the electronic nautical chart. As for the plotter 11, the additional display information may be a position of a recorded trace of the ship 4, a scheduled route setting, a waypoint, an arrival area, and a stopping area. As for the radar device 12, the additional display information may be a position, a speed, etc. of a detected target object. As for the sonar 13, a position of a detected school of fish may be the additional display information. These information may be inputted on real time into the image generating device 1 from the ship instruments. The additional display information acquiring module 17 may assign identifying information (e.g., an identification number) for uniquely identifying and managing each of the inputted additional display information.

In Fig. 3, one example of the additional display information located around the ship 4 is illustrated. In Fig. 3, on the sea surface (on the water surface), waypoints 41 indicative of the destination, and a route line 42 in the shape of a polygonal line indicative of the scheduled route to the destination may be defined. Moreover, near the route line 42, a polygon-shaped (rectangular shape) stopping area 43 may be defined. The waypoint 41, the route line 42, and the stopping area 43 may be set by the user suitably operating the plotter 11 beforehand to specify the position of each location.

Moreover, in the example of Fig. 3, it may be detected using the AIS information acquired by the AIS receiver 9 that another ship 44 is traveling to the right of the ship 4 at a location a little distant forward from the ship 4, and a virtual buoy 45 is located near, forward and left side of the ship 4. Note that, although the virtual buoy is not actually provided on the sea due to situations, such as a difficulty of installation, it may mean an imaginary buoy (intangible) displayed as a label or marker in the screen of a navigation device.

Each additional display information may include information at least indicative of the position (latitude and longitude) of one or more locations on the sea surface (water surface) at which it is placed. For example, the additional display information indicative of the route line 42 includes information on positions of two locations used as bends of the polygonal line (the positions of the locations of the bends correspond to the positions of the waypoint 41). The additional display information on the stopping area 43 may include information at the position of each location used as a vertex of the polygon. Moreover, the additional display information indicative of another ship 44 may include information indicative of the position, the bow direction, the speed, the turning angular velocity, the length and the width of another ship 44.

Next, the establishment of the three-dimensional scene by the three-dimensional scene generating module 22, and the synthesizing of the images by the data synthesizing module 23 are described in detail referring to Fig. 4. Fig. 4 is a conceptual diagram illustrating the three-dimensional scene data 48 which is generated by placing the virtual reality objects 41v, 42v,... on the three-dimensional virtual space 40, and a projection screen 51 placed on the three-dimensional virtual space 40.

As illustrated in Fig. 4, the three-dimensional virtual space 40 where virtual reality objects 41v, 42v,... are placed by the three-dimensional scene generating module 22 may be configured in a rectangular coordinate system which uses a suitable reference position of the ship 4 (e.g., the reference point 4a described above) as the origin, where an xz plane which is a horizontal plane imitates the sea surface (water surface). In the example of Fig. 4, the axis of coordinates may be set such that the +z direction is always in agreement with the bow direction, the +x direction is in agreement with the rightward, and the +y direction is in agreement with upward. Each location (coordinates) in the three-dimensional virtual space 40 may be set so as to correspond to the actual position around the ship 4.

In Fig. 4, one example where the virtual reality objects 41v, 42v, 43v, 44v, and 45v are placed in the three-dimensional virtual space 40, in order to express the situation around the ship 4 illustrated in Fig. 3, is illustrated. Each of the virtual reality objects 41v, 42v, 43v, 44v, and 45v may be placed so that it contacts the xz plane to reflect a relative position of the additional display information indicated by the virtual reality object with respect to the ship 4 on the basis of the bow direction of the ship 4. Upon determining the positions where these virtual reality objects 41v, 42v,... are placed, a calculation using the positions of the GNSS antennas set by the antenna position setting module 26 illustrated in Fig. 1 may be performed.

The virtual reality object 44v indicative of another ship 44 may have the shape of a ship, and may be expressed using a template of the model of a large-sized ship stored beforehand in the memory 18. Moreover, the direction of the model may be oriented so as to indicate the direction of another ship 44 acquired from the AIS information.

The virtual reality object 45v indicative of the virtual buoy 45 may be expressed using a template of the model of a buoy stored beforehand in the memory 18, similar to the virtual reality object 44v of another ship 44.

The virtual reality object 41v of the waypoint 41 may be expressed three-dimensionally in the shape of a thin disk. The virtual reality object 42v of the route line 42 may be expressed three-dimensionally in the shape of a polygonal line comprised of strip plates having a certain thickness and a certain width. The virtual reality object 43v of the stopping area 43 may be expressed three-dimensionally in the shape of a plate having a certain thickness and having a contour of the stopping area 43. For these virtual reality objects 41v, 42v, and 43v, the three-dimensional shapes may be created each time, without using the templates of the models.

The three-dimensional scene generating module 22 may generate the three-dimensional scene data 48 as described above. In the example of Fig. 4, since the virtual reality objects 41v, 42v,... are placed on the basis of azimuth from the position of the ship 4 as the origin, when the position of the ship 4 (positions in the east-and-west direction and the north-and-south direction) changes from the state of Fig. 3, or when the bow direction changes due to a turn etc., a new three-dimensional scene where the virtual reality objects 41v, 42v,... are rearranged may be established, and the three-dimensional scene data 48 may then be updated. Moreover, for example, when the contents of the additional display information are changed due to traveling of another ship 44 from the state of Fig. 3, the three-dimensional scene data 48 may be updated so that the latest additional display information is reflected.

Then, the data synthesizing module 23 may place in the three-dimensional virtual space 40 the projection screen 51 which defines the position and the area where the captured image of the camera 3 is projected. The synthesizing of the images can be realized by setting the position and the direction of a viewpoint camera 55 described below so that both the projection screen 51 and the virtual reality objects 41v, 42v,... are contained in the view of the camera 55.

The data synthesizing module 23 may simulate in the three-dimensional virtual space 40 the position and the direction of the camera 3 mounted on the ship 4, and place the projection screen 51 so as to directly oppose to the camera 3. For the simulation of the position of the camera 3, the position of the camera 3 on the basis of the hull can be obtained based on the setting value of the imaging position setting module 25 illustrated in Fig. 1.

Upon the simulation of the position and the direction of the camera 3, the change in the direction of the camera 3 by the pan/tilt operation described above may be taken into consideration. Further, the simulation may be performed so that the change in the position and the direction of the camera 3 due to the change in the posture and the height of the ship 4 are reflected based on the positional information and the posture information acquired by the position acquiring module 15 and the posture acquiring module 16. The data synthesizing module 23 may interlock with the change in the position and the direction of the camera 3 to change the position and the direction of the projection screen 51 placed in the three-dimensional virtual space 40.

Then, the data synthesizing module 23 may generate a two-dimensional image by performing known rendering to the three-dimensional scene data 48 and the projection screen 51. In more detail, the data synthesizing module 23 may place as the virtual camera, the viewpoint camera 55 in the three-dimensional virtual space 40, and define a frustum (visual cone) 56 which defines an area to be rendered so that the viewpoint camera 55 is used as a vertex and its line-of-sight direction becomes the center axis. Then, the data synthesizing module 23 may convert coordinates of a vertex of the polygon located inside the frustum 56 among the polygons which constitute each object (one of the virtual reality objects 41v, 42v,..., and the projection screen 51) into coordinates of the two-dimensional virtual screen corresponding to the display area of the synthesized image in the display unit 2 by a perspective projection. Then, based on the vertex placed on the virtual screen, a two-dimensional image may be generated by generating and processing pixels at a given resolution.

The two-dimensional image generated in this way may include graphics obtained by rendering the three-dimensional scene data 48 (in other words, the graphics as results of rendering the virtual reality objects 41v, 42v,...). Moreover, during the generation of the two-dimensional image, the captured image of the camera 3 may be placed so as to be pasted at the position corresponding to the projection screen 51. Therefore, the synthesizing of the images by the data synthesizing module 23 may be realized. Since the projection screen 51 has a shape which is curved so as to meet the spherical shell centering on the camera 3, it can prevent distortion of the captured image by a perspective projection.

The viewpoint camera 55 may define the viewpoint of the synthesized image, and its position and direction may be defined by settings of the viewpoint setting module 27. However, by making a special setting in the viewpoint setting module 27, the data synthesizing module 23 may set a mode when generating the synthesized image as a mode in which the position and the direction of the viewpoint camera 55 change automatically so that they are always in agreement with the position and the direction of the camera 3 (viewpoint tracking mode). In this viewpoint tracking mode, since the entire view of the viewpoint camera 55 is always covered by the projection screen 51 (i.e., the captured image of the camera 3), the realistic synthesized image with presence can be realized.

On the other hand, the data synthesizing module 23 may also set the mode into a mode in which the position and the direction of the viewpoint camera 55 follows the viewpoint set in the viewpoint setting module 27 by a proper operation of an input device, regardless of the position and the direction of the camera 3 (independent viewpoint mode). The input device may include, for example, a keyboard 31, a mouse 32, a touch panel (not illustrated), a joy stick, etc. In this independent viewpoint mode, the user can move the viewpoint freely to confirm the additional display information at a position out of the imaging coverage of the camera 3.

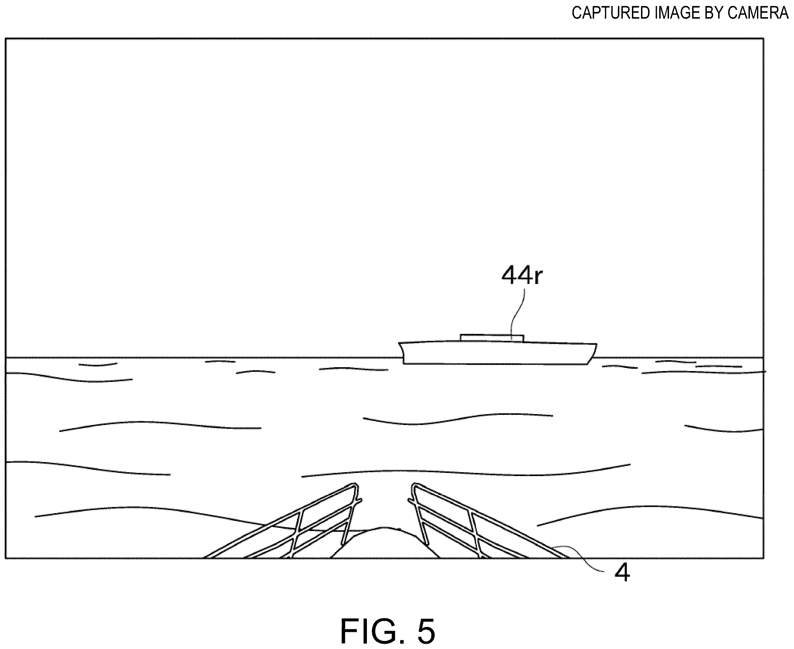

Next, a relation between the image captured by the camera 3 and the synthesized image is described referring to one example. Fig. 5 is a view illustrating one example of the image captured by the camera 3. Fig. 6 is a view illustrating the synthesized image outputted from the data synthesizing module 23.

In Fig. 5, one example of the image captured by the camera 3 of the ship 4 in the situation indicated in Fig. 3 is illustrated. Another ship 44r floating on the sea surface is in the captured image. Moreover, a bow part of the ship 4 is located at the lower center of the image.

Since the virtual buoy 45 is virtual as described above, it will not be caught by the camera 3, as illustrated in Fig. 5. Since the waypoint 41, the route line 42, and the stopping area 43 are also created by the setup of the plotter 11, they will not appear in the image captured by the camera 3.

Fig. 6 illustrates a result of synthesizing the two-dimensional image obtained by rendering the three-dimensional scene data 48 in Fig. 4 with the captured image illustrated in Fig. 5. However, in Fig. 6, the parts which appear in the image captured by the camera 3 are illustrated by broken lines for convenience in order to facilitate the distinction from other parts (similar processing is also applied to other views indicating the synthesized image). In the synthesized image of Fig. 6, the graphics 41f, 42f, 43f, 44f, and 45f expressing the additional display information are placed so as to overlap with the captured image. The graphic 44f indicative of another ship is placed so as to substantially overlap with the position of another ship 44r in the captured image.

The graphics 41f, 42f,... may be generated as results of rendering the three-dimensional shapes of the virtual reality objects 41v, 42v,... which constitute the three-dimensional scene data 48 illustrated in Fig. 4, from the viewpoint at the same position and the direction as those of the camera 3. Therefore, even when the graphics 41f, 42f,... are superimposed with the realistic image captured by the camera 3, a visual disagreement may not substantially occur.

As illustrated in Fig. 6, the graphics 41f, 42f,... which express the additional display information in virtual reality may be placed on the synthesized image as if they are placed on the sea surface in the captured image. In other words, the graphics 41f, 42f,... which express the additional display information in virtual reality may be arranged along the water surface in the captured image. This may be realized by placing the virtual reality objects 41v, 42v,... illustrated in Fig. 4 so as to touch the xz plane located below the camera 3 by a distance calculated based on the height set by the imaging position setting module 25 (see Fig. 1), and correctly placing the position of the projection screen 51 in consideration of the position and the direction of the camera 3.

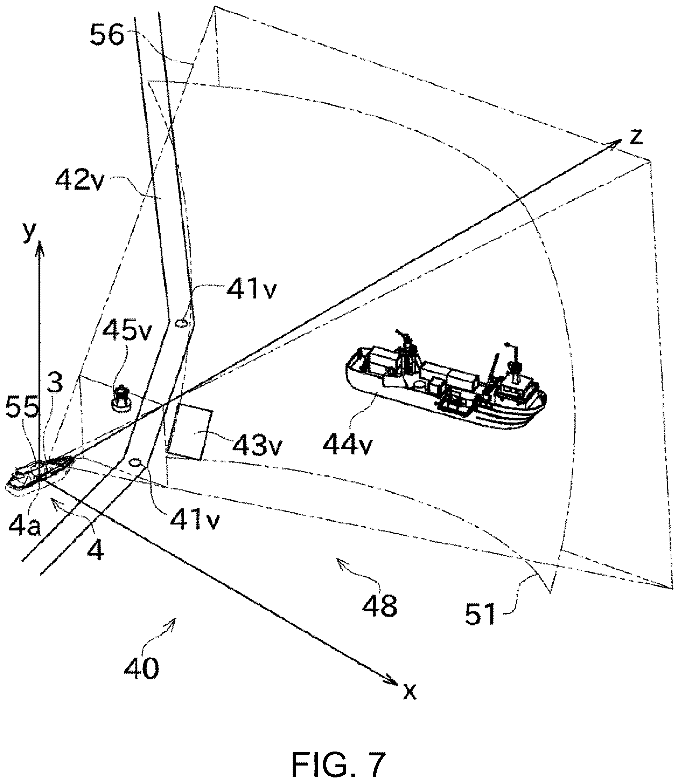

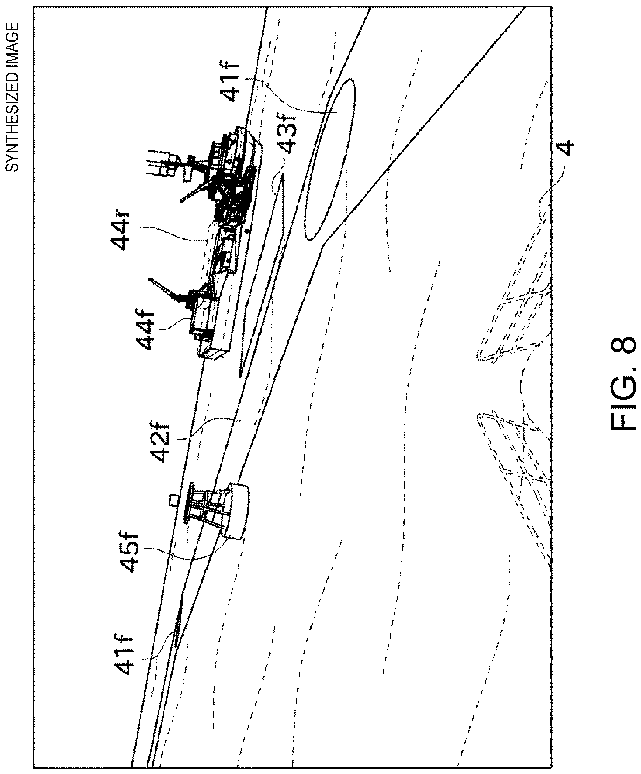

Next, a change in the synthesized image accompanying the shake of the ship 4 is described. Fig. 7 is a conceptual diagram illustrating a case where the ship 4 shakes in the pitch direction and the roll direction from the state of Fig. 4. Fig. 8 is a view illustrating the synthesized image in the case of Fig. 7.

As described above, since the camera 3 is attached to the ship 4, its position and direction may change in connection with the posture of the ship 4 inclining by a wave etc., or the ship 4 running over a wave. In this embodiment, when a shake (pitching, rolling and heaving) occurs on the ship 4, the data synthesizing module 23 may change the position and the direction of the camera 3 in the three-dimensional virtual space 40 so as to simulate a change in the posture of the ship 4 acquired by the posture acquiring module 16, and a change in the position of the ship 4 in the vertical direction acquired by the position acquiring module 15, and change the position of the projection screen 51 accordingly.

In Fig. 7, a situation when the posture of the ship 4 changes in the pitch direction and the roll direction from the state of Fig. 4 is illustrated. In the example of Fig. 7, the ship 4 inclines the bow downward and the port downward, and the position and the direction of the camera 3 change so as to reflect the inclination. The projection screen 51 may interlockedly move to directly oppose to the camera 3 of which the position and the direction changed.

In the example of Fig. 7, by the viewpoint tracking mode, the position and the direction of the viewpoint camera 55 also change so as to follow the camera 3 of which the position and the direction changed as described above. One example of the synthesized image corresponding to Fig. 7 is illustrated in Fig. 8, and as illustrated in this figure, even if the position and the direction of the camera 3 change in connection with the shake of the ship 4, since the position and the direction of the projection screen 51 interlockedly change, and the position and the direction of the viewpoint camera 55 which renders the three-dimensional scene change, a comfortable synthesized image can be continuously obtained.

In the viewpoint tracking mode, each time the pitch angle or the roll angle changes more than a given value with the shakes of the ship 4, the rendering of the three-dimensional scene data 48 may be updated by the data synthesizing module 23, and, therefore, the graphics 41f, 42f,... based on the latest viewpoint may be generated. Accordingly, the display of the graphics 41f, 42f,... can be changed appropriately to maintain a state where they are placed on the sea surface, while the direction in which the sea surface appears change in the captured image of the camera 3 with the shakes of the ship 4.

Therefore, the extended-reality image in which the imaginary objects can be seen as if they are floating on the sea surface, and which is natural and high in the actual feeling can be obtained. Moreover, by the user looking at the sea surface projected on the display unit 2, since the graphics 41f, 42f,... indicating the virtual reality come into the user's field of view comprehensively, he/she can acquire every piece of necessary information.

Next, processing executed by the target object position estimating module 35 and the target object direction estimating module 36 for placing the virtual reality object related to the moving target object (e.g., the virtual reality object 44v of another ship) in the three-dimensional virtual space 40 is described.

In the above example, the information on another ship 44 indicated by the virtual reality object 44v may be received by the AIS receiver 9. That is, another ship 44 may be an AIS target object. Each time the AIS receiver 9 receives the AIS information, it may output this information to the image generating device 1 on real time. However, since the interval at which another ship 44 transmits its position etc. as the AIS information changes according to the situation, it may be about 1 time per 10 seconds, and, therefore, the updating of the information may not be frequent.

Thus, if the position and the direction of the virtual reality object 44v which constitute the three-dimensional scene data 48 is updated only at the timing of the image generating device 1 acquiring the AIS information, the motion of the graphic 44f indicative of another ship in the synthesized image may become discontinuously and coarse, thereby causing an unnatural indication.

In this regard, the image generating device 1 of this embodiment may be provided with the target object position estimating module 35, the target object direction estimating module 36, and the image updating module 37. The target object position estimating module 35 and the target object direction estimating module 36 may estimate the position and the direction of another ship 44 at a timing later than the acquisition of the additional display information, based on the latest-acquired additional display information (AIS information) for another ship 44. Then, the image updating module 37 may cause the synthesized image generating module 20 to update the synthesized image so that the results of the estimation are reflect to the position and the direction of the virtual reality object 44v.

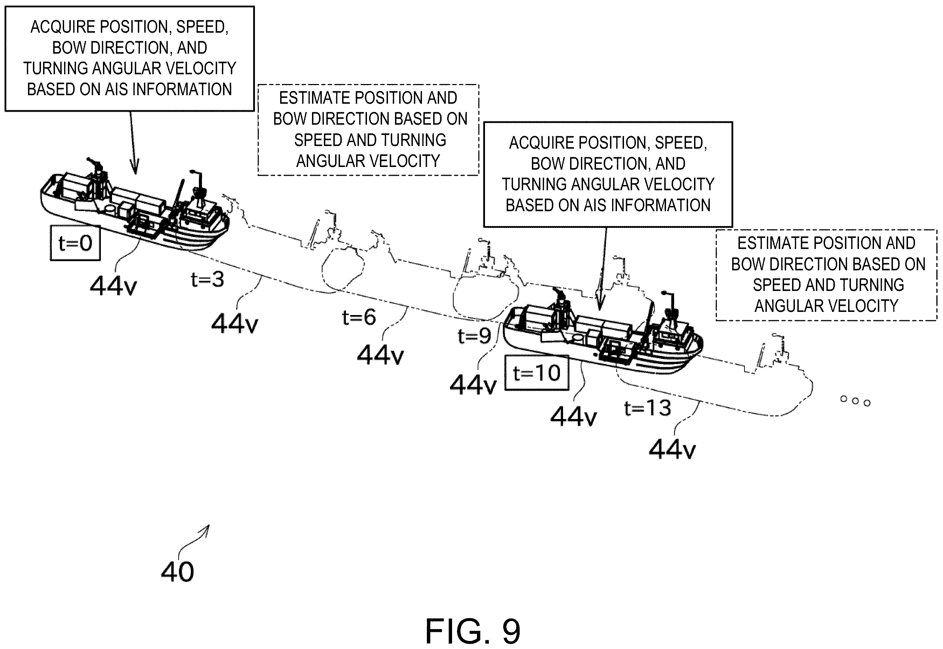

Below, this update is concretely described with reference to Fig. 9. Fig. 9 is a conceptual diagram illustrating a situation where the position and the direction of the virtual reality object 44v of another ship being placed in the three-dimensional virtual space 40 are updated for the additional display information on another ship 44 based on the AIS information.

In Fig. 9, the three-dimensional virtual space 40 where the three-dimensional scene generating module 22 establishes the three-dimensional scene is illustrated. It is assumed that the AIS receiver 9 receives the AIS information from another ship 44 at a certain time (this time is set as t=0), and the additional display information acquiring module 17 of the image generating device 1 acquires the position, the speed, the bow direction, and the turning angular velocity of another ship 44 based on the AIS information. Based on this result, the three-dimensional scene generating modules 22 may place the virtual reality object 44v at a position and in a direction corresponding to the obtained position and bow direction.

Also after that, the image generating device 1 may stand by for the additional display information acquiring module 17 acquiring new AIS information. However, when the AIS information is not received for a certain period of time (e.g., for 3 seconds), the target object position estimating module 35 and the target object direction estimating module 36 may estimate the position and the bow direction of another ship 44 at this timing, and the image updating module 37 may cause the synthesized image generating module 20 to update the synthesized image based on the estimated results. That is, the image updating module 37 may cause the three-dimensional scene generating module 22 to update the three-dimensional scene so that the virtual reality object 44v is rearranged based on the estimated results for the position and the bow direction of another ship 44, and may cause the data synthesizing module 23 to synthesize a new three-dimensional scene with the captured image. This estimation can be obtained by calculating by using a known formula based on the speed and the turning angular velocity of another ship 44 obtained at t=0, when the position and the bow direction of another ship 44 obtained at the same timing are used as references. Therefore, also at t=3, the position and the direction of the virtual reality object 44v can be updated.

In the example of Fig. 9, the estimation of the position and the direction by the target object position estimating module 35 and the target object direction estimating module 36 is performed every 3 seconds. Therefore, also at t=6 and t=9, the position and the direction of the virtual reality object 44v are updated based on the estimation.

It is assumed that, at a timing of t=10 which is 10 seconds after the reception of the last AIS information, the AIS receiver 9 receives the new AIS information from another ship 44. In this case, the three-dimensional scene generating module 22 may immediately update the position and the direction of the virtual reality object 44v so that they become the obtained position and bow direction.

Also after that, the estimation of the position and the direction by the target object position estimating module 35 and the target object direction estimating module 36 may be performed every 3 seconds. Therefore, at a timing of t=13, the position and the direction of the virtual reality object 44v may be updated based on the estimation.

By configured in this way, even when the acquisition time interval of the additional display information indicative of the position of another ship 44 is long, the indication of the graphic 44f in the synthesized image can be updated at a comparatively short time interval by estimating the position and the bow direction of another ship 44 and updating the position and the direction of the virtual reality object 44v. Therefore, the extended virtual reality expression in the synthesized image can be realized with the smooth motion.

Although in the example of Fig. 9 the position and the bow direction of another ship 44 are estimated and the position and the direction of the virtual reality object 44v are updated every 3 seconds, the interval of updating the position etc. by the estimation can be arbitrarily defined as 1 second, 2 seconds, 2.5 seconds, 5 seconds, etc., other than 3 seconds. Moreover, the time interval for updating position etc. may be carried out at an unequal time interval, instead of the equal time interval as described above.

Note that the processing for updating the position and the direction of the virtual reality object 44v by the estimation of the position and the direction may also be effective, for example, for another ship (another ship as a TT target object) detected by the radar device 12, as well as another ship 44 based on the AIS information. That is, since the radar image in the radar device 12 is not updated until the radar antenna revolves one time, the updating of the TT information may not be frequent. Therefore, by estimating the position and the direction and finely updating the position and the direction of the virtual reality object as described above, the coarseness of the motion in the synthesized image can be reduced, thereby improving the reality.

As described above, the image generating device 1 of this embodiment may include the captured image inputting module 21, the position acquiring module 15, the posture acquiring module 16, the additional display information acquiring module 17, the synthesized image generating module 20, the target object position estimating module 35, and the image updating module 37. The captured image inputting module 21 may acquire the image captured by the camera 3 installed in the ship 4. The position acquiring module 15 may acquire the positional information indicative of the position of the ship 4. The posture acquiring module 16 may acquire the posture information indicative of the posture of the ship 4. The additional display information acquiring module 17 may acquire the additional display information including the information indicative of the position of another ship 44 which is a target object. The synthesized image generating module 20 may generate the synthesized image in which the graphic 44f rendering the three-dimensional virtual reality object 44v indicative of the additional display information is synthesized with the captured image of the camera 3 based on the positional information, the posture information, and the additional display information. The target object position estimating module 35 may estimate the position of another ship 44 which is the target object at a timing later than the timing at which the latest additional display information is acquired for another ship 44 based on the speed of another ship 44 contained in the additional display information. The image updating module 37 may cause the synthesized image generating module 20 to update the graphic of the virtual reality object 44v of another ship 44 (i.e., the graphic 44f) in the synthesized image based on the result of the estimation by the target object position estimating module 35.

Therefore, even when the acquisition time interval of the additional display information indicative of the position of the target object (in this embodiment, another ship 44) is long, the graphic 44f rendering the virtual reality object 44v can be updated by estimating the position of another ship 44 at the suitable timing. Therefore, it may become possible to realize the virtual reality image with a smooth motion.

Moreover, the image generating device 1 of this embodiment may be provided with the target object direction estimating module 36. This target object direction estimating module 36 may estimate the bow direction of another ship 44 after the AIS information is acquired for another ship 44 until the subsequent AIS information is acquired based on the turning angular velocity of another ship 44 contained in the additional display information. The image updating module 37 may cause the synthesized image generating module 20 to update the graphic of the virtual reality object 44v of another ship 44 (i.e., the graphic 44f) in the synthesized image based on the result of the estimation by the target object direction estimating module 36.

Therefore, the graphic 44f rendering the virtual reality object 44v can be updated by estimating the direction of the target object (in this embodiment, another ship 44) similarly to the position. Therefore, a more natural motion of the image can be realized.

Moreover, in the image generating device 1 of this embodiment, the synthesized image generating module 20 can synthesize the graphic 44f rendering the virtual reality object 44v of the shape of another ship with the image captured by the camera 3.

Therefore, the movement of a surrounding ship can be expressed by the smooth motion of the three-dimensional computer graphic of another ship.

Moreover, in the image generating device 1 of this embodiment, the additional display information may include the AIS information received by the AIS receiver 9.

Therefore, even when another ship 44 is based on the AIS information of which the updating frequency tends to be less in many cases, the virtual reality image with the smooth motion can be realized.

Moreover, in the image generating device 1 of this embodiment, the additional display information may include the information on the position and the speed of another ship which is acquired based on the transition of the radar image acquired by the radar device 12.

Therefore, even when another ship is based on the information from the radar device 12 which cannot be updated, such as the position of the target object, until the radar antenna revolves one time, the virtual reality display with the smooth motion can be realized.

Although the suitable embodiment of the present disclosure is described above, the above configuration may be changed, for example, as follows.

The three-dimensional scene generating module 22 may be configured to estimate only the position among the position and the direction of the moving target object (the direction is not estimated).

In an example that does not form part of the invention, since the additional display information is various as described above, the additional display information may not include the information on the speed of the target object. In this case, the target object position estimating module 35 may estimate the speed, for example, based on the transition of the position of the target object contained in the additional display information, and estimate the position of the target object based on the estimated speed. Thus, the target object position estimating module 35 may estimate the position of the target object based on the speed of the target object estimated from the additional display information, instead of the speed of the target object contained in the additional display information.

Similarly to the above, the additional display information may not include the information on the angular velocity of the direction of the target object. In this case, the target object direction estimating module 36 may estimate the angular velocity, for example, based on the transition of the direction of the target object contained in the additional display information, and estimate the direction of the target object based on the estimated angular velocity. Thus, the target object direction estimating module 36 may estimate the direction of the target object based on the angular velocity of the direction of the target object estimated from the additional display information, instead of the angular velocity of the direction of the target object contained in the additional display information.

The data synthesizing module 23 may be configured so that the three-dimensional scene data 48 and the projection screen 51 may not be rendered simultaneously. That is, the data synthesizing module 23 may be configured to create separately the two-dimensional images which are rendering results of only the three-dimensional scene data 48 (the images of the graphics 41f, 42f,...), and the two-dimensional image which is a rendering result of only the projection screen 51 (the image in which the captured image is pasted on the projection screen 51), and then synthesize the two-dimensional images. In this case, while performing the rendering of the three-dimensional scene data 48 as needed according to the movement etc. of the ship 4, the rendering of the projection screen 51 can be performed at a short time interval according to the frame rate of the image captured by the camera 3.

In the camera 3, the pan/tilt function described above may be omitted, and the imaging direction may be fixed, for example, to forward. Moreover, the camera 3 may be installed so as to image a direction other than the forward (e.g., rearward).

The camera 3 may be configured so that it can simultaneously image the all directions over 360° around the ship 4.

When the user changes the direction of the viewpoint camera 55, the pan/tilt operation of the camera 3 may be automatically performed so as to follow the change in the direction.

Upon generating the three-dimensional scene data 48 by the three-dimensional scene generating module 22, the virtual reality objects 41v, 42v,... may be placed on the basis of the bow direction using the position of the ship 4 as the origin in the above embodiment, as illustrated in Fig. 4. However, the virtual reality objects 41v, 42v,... may be placed on the basis of north in which the +z direction always points north, without the bow direction. In this case, when the bow direction of the ship 4 changes due to a turn etc., the direction of the ship 4 in the three-dimensional virtual space 40 may be changed to the yaw direction, instead of rearranging the virtual reality objects 41v, 42v,... Then, the changes in the position and the direction of the camera 3 at this time may be simulated in the three-dimensional virtual space 40, and a rendering may be performed in the interlocking manner while changing the position and the direction of the viewpoint camera 55, thereby obtaining the completely same rendering result as the case of the bow direction basis.

Alternatively, the coordinate system of the three-dimensional virtual space 40 may be defined so that a fixed point suitably defined on the earth is used as the origin, and, for example, the +z direction serves as north and the +x direction serves as east, instead of using the position of the ship 4 as the origin. In this case, in the three-dimensional virtual space 40 of the coordinate system fixed to the earth, the position and the direction of the ship 4 may change based on the positional information and the posture information, and the change in the position and the direction of the camera 3 accompanying the change may be simulated in the three-dimensional virtual space 40.

In the image generating device 1, a shake of the synthesized image accompanying the shake of the ship 4 may be reduced. For example, the three-dimensional scene generating module 22 may reduce the change in the position and the direction of the viewpoint camera 55, even when the ship 4 shakes.

The display mode of the graphic 44f in the synthesized image may be changed between the case where the virtual reality object 44v is placed based on the additional display information and the case where the virtual reality object 44v is placed based on the results of the estimations by the target object position estimating module 35 and the target object direction estimating module 36. For example, it is possible to display near the graphic 44f a mark indicating that the position and the direction are based on the estimations.

The ship instruments (information source of the additional display information) connected to the image generating device 1 are not limited to what is described in Fig. 1, and other ship instruments may be included.

The present disclosure is applicable not only to the ship which travels on the sea, but may also be applicable to arbitrary water-surface movable bodies which can travel, for example, the sea, a lake, or a river.

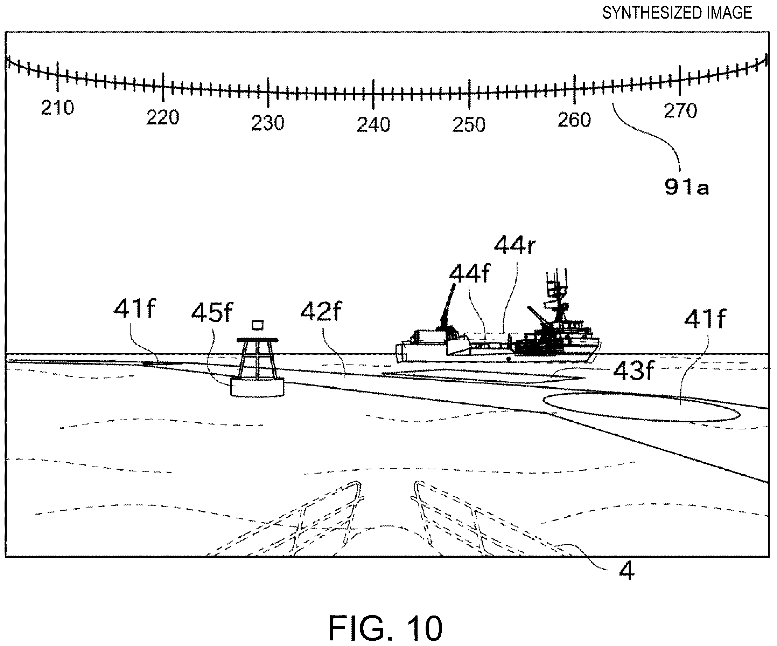

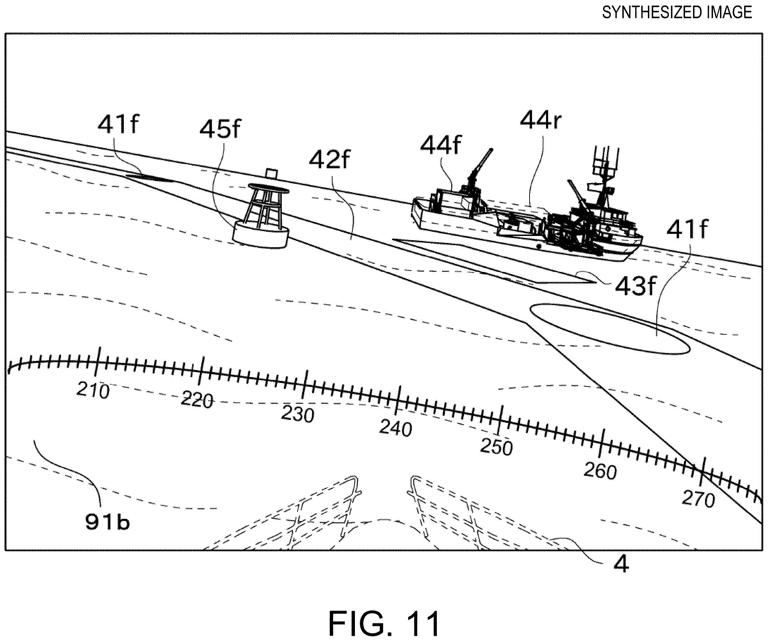

When displaying the graphics etc. superimposedly on the image captured by the imaging device as described above, the limited display area can be effectively utilized by simultaneously displaying additional information 91a and 91b, such as the scale images etc. indicative of the direction, as illustrated in Figs. 10 and 11. At this time, the positions of the additional information may be automatically changed and moved so that the graphics are not hidden by the additional information as much as possible. Moreover, the additional information 91a and 91b may be displayed so as to incline according to the inclination of the hull. By displaying in such a way, exact additional information can always be visually observed even when the hull inclines.

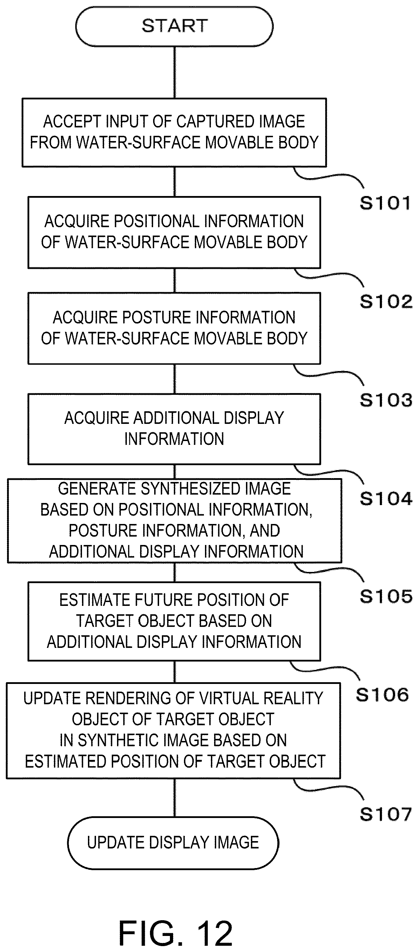

Processing executed in the embodiment of the present disclosure is described with reference to a flowchart of Fig. 12. In this embodiment, the image captured by the imaging device installed in the water-surface movable body may be inputted (S101). The positional information indicative of the position of the water-surface movable body may be acquired (S102), and the posture information indicative of the posture of the water-surface movable body may be acquired (S103). The additional display information including the information indicative of the position of the target object may be acquired (S104). The synthesized image in which the graphic rendering the three-dimensional virtual reality object indicative of the additional display information is synthesized with the captured image may be generated based on the positional information, the posture information, and the additional display information (S105). As for the target object, the position of the target object, at the timing later than the timing at which the latest additional display information is acquired, is estimated based on the speed of the target object included in the additional display information or, in an example that does not form part of the invention, based on the speed of the target object estimated from the additional display information (S106). Based on the estimated speed of the target object, the rendering of the virtual reality object of the target object in the synthesized image may be updated (S107). Therefore, the problems described above may be solved.

### DESCRIPTION OF REFERENCE CHARACTERS

- 1: Image Generating Device
- 3: Camera (Imaging Device)
- 4: Ship (Water-Surface Movable Body)
- 15: Position Acquiring Module
- 16: Posture Acquiring Module
- 17: Additional Display Information Acquiring Module
- 20: Synthesized Image Generating Module
- 35: Target Object Position Estimating Module
- 36: Target Object Direction Estimating Module
- 37: Image Updating Module
- 44: Another Ship (Target Object)
- 44v: Virtual Reality Object
- 44f: Graphic

## Claims

1. An image generating device (1), comprising:
a captured image inputting module (21) configured to input an image captured by an imaging device (3) mounted on a water-surface movable body (4);
a position acquiring module (15) configured to acquire positional information indicative of a position of the water-surface movable body (4);
a posture acquiring module (16) configured to acquire posture information indicative of a posture of the water-surface movable body (4);
an additional display information acquiring module (17) configured to non-continuously acquire additional display information including information indicative of a position of a target object (44) at consecutive points in time;
a synthesized image generating module (20) configured to generate, every time additional display information is acquired, a synthesized image where a graphic rendering a three-dimensional virtual reality object indicative of the additional display information is synthesized with the captured image based on measured position and imaging direction of the imaging device relative to the water-surface movable body, the positional information, the posture information, and the additional display information;
a target object position estimating module (35) configured to estimate a position of the target object (44) at a timepoint between acquisition of two consecutive pieces of additional display information, based on a speed of the target object (44) included in the last acquired additional display information; and
an image updating module (37) configured to cause the synthesized image generating module (20) to update the rendering of the three-dimensional virtual reality object of the target object (44) in the synthesized image such that the three-dimensional virtual reality object is rearranged in the synthesized image based on a result of the estimation by the target object position estimating module (35) at said timepoint between acquisition of two consecutive pieces of additional display information.

2. The image generating device (1) of claim 1, comprising a target object direction estimating module (35) configured to estimate a direction of the target object (44) at the timing later than the latest timing at which the additional display information was acquired the latest, based on an angular velocity of the direction of the target object (44) included in the additional display information or an angular velocity of the direction of the target object (44) estimated from the additional display information,
wherein the image updating module (37) causes the synthesized image generating module (20) to update the rendering of the virtual reality object of the target object (44) in the synthesized image based on a result of the estimation by the target object direction estimating module (35).

3. The image generating device (1) of claim 1 or 2, wherein the synthesized image generating module (20) synthesizes the graphic rendering the virtual reality object having the shape of a ship with the capture image.

4. The image generating device (1) of any one of claims 1 to 3, wherein the additional display information includes AIS information received by an AIS receiver (9).

5. The image generating device (1) of any one of claims 1 to 4, wherein the additional display information includes information on the position and the speed of the target object (44) acquired based on successive radar images from a radar device (12).

6. The image generating device (1) of any one of claims 1 to 5, wherein the synthesized image generating module (20) further generates a scale image indicative of an azimuth, and
wherein a display position of the scale image is determined according to a position where the graphic is displayed in the synthesized image.

7. A method of generating an image, comprising:
inputting an image captured by an imaging device mounted on a water-surface movable body;
acquiring positional information indicative of a position of the water-surface movable body;
acquiring posture information indicative of a posture of the water-surface movable body;
non-continuously acquiring additional display information including information indicative of a position of a target object at consecutive points in time;
generating, every time additional display information is acquired, a synthesized image where a graphic rendering a three-dimensional virtual reality object indicative of the additional display information is synthesized with the captured image based on measured position and imaging direction of the imaging device relative to the water-surface movable body, the positional information, the posture information, and the additional display information;
estimating a position of the target object at a timepoint between acquisition of two consecutive pieces of additional display information, based on a speed of the target object included in the last acquired additional display information; and
updating the rendering of the three-dimensional virtual reality object of the target object in the synthesized image such that the three-dimensional virtual reality object is rearranged in the synthesized image based on the estimated position of the target object at said timepoint between acquisition of two consecutive pieces of additional display information.

## Patentansprüche

1. Bilderzeugungsvorrichtung (1), umfassend:
ein Eingabemodul (21) für aufgenommene Bilder, das konfiguriert ist, um ein Bild einzugeben, das von einer Bildgebungsvorrichtung (3) aufgenommen wurde, die auf einem auf einer Wasseroberfläche beweglichen Körper (4) montiert ist;
ein Positionserfassungsmodul (15), das konfiguriert ist, um Positionsinformationen zu erfassen, die eine Position des auf der Wasseroberfläche beweglichen Körpers (4) angeben;
ein Lageerfassungsmodul (16), das konfiguriert ist, um Lageinformationen zu erfassen, die eine Lage des auf der Wasseroberfläche beweglichen Körpers (4) angeben;
ein Erfassungsmodul (17) für zusätzliche Anzeigeinformationen, das konfiguriert ist, um nicht kontinuierlich zusätzliche Anzeigeinformationen zu erfassen, die Informationen enthalten, die eine Position eines Zielobjekts (44) zu aufeinanderfolgenden Zeitpunkten angeben;
ein Erzeugungsmodul (20) für synthetisierte Bilder, das konfiguriert ist, um jedes Mal, wenn zusätzliche Anzeigeinformationen erfasst werden, ein synthetisiertes Bild zu erzeugen, in dem eine Grafik, die ein dreidimensionales virtuelles Realitätsobjekt wiedergibt, das die zusätzlichen Anzeigeinformationen angibt, mit dem aufgenommenen Bild synthetisiert wird, basierend auf einer gemessenen Position und Bildgebungsrichtung der Bildgebungsvorrichtung relativ zu dem auf der Wasseroberfläche beweglichen Körper, den Positionsinformationen, den Lageinformationen und den zusätzlichen Anzeigeinformationen;
ein Zielobjekt-Positions-Schätzungs-Modul (35), das konfiguriert ist, um eine Position des Zielobjekts (44) zu einem Zeitpunkt zwischen der Erfassung von zwei aufeinanderfolgenden zusätzlichen Anzeigeinformationen zu schätzen, basierend auf einer Geschwindigkeit des Zielobjekts (44), das in den zuletzt erfassten zusätzlichen Anzeigeinformationen enthalten ist; und
ein Bildaktualisierungsmodul (37), das konfiguriert ist, um das Erzeugungsmodul (20) für synthetisierte Bilder zu veranlassen, die Wiedergabe des dreidimensionalen virtuellen Realitätsobjekts des Zielobjekts (44) in dem synthetisierten Bild zu aktualisieren, so dass das dreidimensionale virtuelle Realitätsobjekt in dem synthetisierten Bild basierend auf einem Ergebnis der Schätzung durch das Zielobjekt-Positions-Schätzungs-Modul (35) zu dem Zeitpunkt zwischen der Erfassung von zwei aufeinanderfolgenden zusätzlichen Anzeigeinformationen neu angeordnet wird.

2. Bilderzeugungsvorrichtung (1) nach Anspruch 1, umfassend ein Zielobjekt-Richtungs-Schätzungs-Modul (35), das konfiguriert ist, um eine Richtung des Zielobjekts (44) zu dem Zeitpunkt zu schätzen, der später als der späteste Zeitpunkt ist, zu dem die zusätzlichen Anzeigeinformationen zuletzt erfasst wurden, basierend auf einer Winkelgeschwindigkeit der Richtung des Zielobjekts (44), die in den zusätzlichen Anzeigeinformationen enthalten ist, oder einer Winkelgeschwindigkeit der Richtung des Zielobjekts (44), die aus den zusätzlichen Anzeigeinformationen geschätzt wird,
wobei das Bildaktualisierungsmodul (37) das Erzeugungsmodul (20) für synthetisierte Bilder veranlasst, die Wiedergabe des virtuellen Realitätsobjekts des Zielobjekts (44) in dem synthetisierten Bild basierend auf einem Ergebnis der Schätzung durch das Zielobjekt-Richtungs-Schätzungs-Modul (35) zu aktualisieren.

3. Bilderzeugungsvorrichtung (1) nach Anspruch 1 oder 2, wobei das Erzeugungsmodul (20) für synthetisierte Bilder die Grafik, die das virtuelle Realitätsobjekt in der Form eines Schiffes wiedergibt, mit dem aufgenommenen Bild synthetisiert.

4. Bilderzeugungsvorrichtung (1) nach einem der Ansprüche 1 bis 3, wobei die zusätzlichen Anzeigeinformationen AIS-Informationen enthalten, die von einem AIS-Empfänger (9) empfangen werden.

5. Bilderzeugungsvorrichtung (1) nach einem der Ansprüche 1 bis 4, wobei die zusätzlichen Anzeigeinformationen Informationen über die Position und die Geschwindigkeit des Zielobjekts (44) enthalten, die basierend auf aufeinanderfolgenden Radarbildern von einer Radarvorrichtung (12) erfasst werden.

6. Bilderzeugungsvorrichtung (1) nach einem der Ansprüche 1 bis 5, wobei das Erzeugungsmodul (20) für synthetisierte Bilder ferner ein Skalenbild erzeugt, das einen Azimut angibt, und
wobei eine Anzeigeposition des Skalenbilds gemäß einer Position bestimmt wird, an der die Grafik in dem synthetisierten Bild angezeigt wird.

7. Verfahren zum Erzeugen eines Bilds, aufweisend:
Eingeben eines Bilds, das von einer Bildgebungsvorrichtung aufgenommen wurde, die auf einem auf einer Wasseroberfläche beweglichen Körper montiert ist;
Erfassen von Positionsinformationen, die eine Position des auf der Wasseroberfläche beweglichen Körpers angeben;
Erfassen von Lageinformationen, die eine Lage des auf der Wasseroberfläche beweglichen Körpers angeben;
nicht kontinuierliches Erfassen von zusätzlichen Anzeigeinformationen, die Informationen enthalten, die eine Position eines Zielobjekts zu aufeinanderfolgenden Zeitpunkten angeben;
Erzeugen, jedes Mal, wenn zusätzliche Anzeigeinformationen erfasst werden, eines synthetisierten Bilds, in dem eine Grafik, die ein dreidimensionales virtuelles Realitätsobjekt wiedergibt, das die zusätzlichen Anzeigeinformationen angibt, mit dem aufgenommenen Bild synthetisiert wird, basierend auf einer gemessenen Position und Bildgebungsrichtung der Bildgebungsvorrichtung relativ zu dem auf der Wasseroberfläche beweglichen Körper, den Positionsinformationen, den Lageinformationen und den zusätzlichen Anzeigeinformationen;
Schätzen einer Position des Zielobjekts zu einem Zeitpunkt zwischen der Erfassung von zwei aufeinanderfolgenden zusätzlichen Anzeigeinformationen, basierend auf einer Geschwindigkeit des Zielobjekts, das in den zuletzt erfassten zusätzlichen Anzeigeinformationen enthalten ist; und
Aktualisieren der Wiedergabe des dreidimensionalen virtuellen Realitätsobjekts des Zielobjekts in dem synthetisierten Bild, so dass das dreidimensionale virtuelle Realitätsobjekt in dem synthetisierten Bild basierend auf der geschätzten Position des Zielobjekts zu dem Zeitpunkt zwischen der Erfassung von zwei aufeinanderfolgenden zusätzlichen Anzeigeinformationen neu angeordnet wird.

## Revendications

1. Dispositif de génération d'image (1), comprenant :
un module d'entrée d'image capturée (21) configuré pour entrer une image capturée par un dispositif d'imagerie (3) monté sur un corps mobile à la surface de l'eau (4) ;
un module d'acquisition de position (15) configuré pour acquérir des informations de position indicatives d'une position du corps mobile à la surface de l'eau (4) ;
un module d'acquisition de posture (16) configuré pour acquérir des informations de posture indicatives d'une posture du corps mobile à la surface de l'eau (4) ;
un module d'acquisition d'informations d'affichage supplémentaires (17) configuré pour acquérir de manière non continue des informations d'affichage supplémentaires comprenant des informations indicatives d'une position de l'objet cible (44) à des points temporels consécutifs ;
un module de génération d'image synthétisée (20) configuré pour générer, chaque fois que des informations d'affichage supplémentaires sont acquises, une image synthétisée dans laquelle un graphique rendant un objet de réalité virtuelle tridimensionnel indicatif des informations d'affichage supplémentaires est synthétisé avec l'image capturée sur la base de la position mesurée et d'une direction d'imagerie du dispositif d'imagerie par rapport au corps mobile à la surface de l'eau, les informations de position, les informations de posture et les informations d'affichage supplémentaires ;
un module d'estimation de position d'objet cible (35) configuré pour estimer une position de l'objet cible (44) à un point temporel entre les acquisitions de deux éléments consécutifs d'informations d'affichage supplémentaires, sur la base d'une vitesse de l'objet cible (44) compris dans les dernières informations d'affichage supplémentaires acquises ; et
un module de mise à jour d'image (37) configuré pour amener le module de génération d'image synthétisée (20) à mettre à jour le rendu de l'objet de réalité virtuelle tridimensionnel de l'objet cible (44) dans l'image synthétisée de sorte que l'objet de réalité virtuelle tridimensionnel soit réagencé dans l'image synthétisée sur la base d'un résultat de l'estimation par le module d'estimation de position d'objet cible (35) audit point temporel entre les acquisitions de deux éléments constitutifs d'informations d'image supplémentaires.

2. Dispositif de génération d'image (1) selon la revendication 1, comprenons un module d'estimation de direction d'objet cible (35) configuré pour estimer une direction de l'objet cible (44) à l'instant après l'instant le plus récent auquel les informations d'affichage supplémentaires ont été acquises le plus récemment, sur la base d'une vitesse angulaire de la direction de l'objet cible (44) comprise dans les informations d'affichage supplémentaires ou d'une vitesse angulaire de la direction de l'objet cible (44) estimée à partir des informations d'affichage supplémentaires,
dans lequel le module de mise à jour d'image (37) amène le module de génération d'image synthétisée (20) à mettre à jour le rendu de l'objet de réalité virtuelle de l'objet cible (44) dans l'image synthétisée sur la base d'un résultat de l'estimation par le module d'estimation de direction d'objet cible (35).

3. Dispositif de génération d'image (1) selon la revendication 1 ou 2, dans lequel le module de génération d'image synthétisée (20) synthétise le rendu graphique de l'objet de réalité virtuelle ayant la forme d'un navire avec l'image capturée.

4. Dispositif de génération d'image (1) selon l'une des revendications 1 à 3, dans lequel les informations d'affichage supplémentaires comprennent des informations AIS reçues par un récepteur AIS (9).

5. Dispositif de génération d'image (1) selon l'une des revendications 1 à 4, dans lequel les informations d'affichage supplémentaires comprennent des informations sur la position et la vitesse de l'objet cible (44) acquises sur la base d'images radar successives d'un dispositif radar (12).

6. Dispositif de génération d'image (1) selon l'une des revendications 1 à 5, dans lequel le module de génération d'image synthétisée (20) génère en outre une image d'échelle indicative d'un azimut, et
dans lequel une position d'affichage de l'image d'échelle est déterminée en fonction d'une position à laquelle le graphique est affiché dans l'image synthétisée.

7. Procédé de génération d'une image, comprenant :
l'entrée d'une image capturée par un dispositif d'imagerie monté sur un corps mobile à la surface de l'eau ;
l'acquisition d'informations de position indicatives d'une position du corps mobile à la surface de l'eau ;
l'acquisition d'informations de posture indicatives d'une posture du corps mobile à la surface de l'eau ;
l'acquisition de manière non continue d'informations d'affichage supplémentaires comprenant des informations indicatives d'une position d'un objet cible à des points temporels consécutifs ;
la génération, chaque fois que des informations d'affichage supplémentaires sont acquises, d'une image synthétisée dans laquelle un graphique rendant un objet de réalité virtuelle tridimensionnel indicatif des informations d'affichage supplémentaires est synthétisé avec l'image capturée sur la base de la position mesurée et d'une direction d'imagerie du dispositif d'imagerie par rapport au corps mobile à la surface de l'eau, les informations de position, les informations de posture et les informations d'affichage supplémentaires ;
l'estimation d'une position de l'objet cible à un point temporel entre les acquisitions de deux éléments consécutifs d'informations d'affichage supplémentaires, sur la base d'une vitesse de l'objet cible compris dans les dernières informations d'affichage supplémentaires acquises ; et
la mise à jour du rendu de l'objet de réalité virtuelle tridimensionnel de l'objet cible dans l'image synthétisée de sorte que l'objet de réalité virtuelle tridimensionnel soit réagencé dans l'image synthétisée sur la base de la position estimée de l'objet cible audit point temporel entre les acquisitions de deux éléments constitutifs d'informations d'image supplémentaires.
